# EUROPEAN PATENT SPECIFICATION

(11) **EP 4 119 843 B1**
(45) Date of publication and mention of the grant of the patent: **20.08.2025**
(21) Application number: 20923759.3
(22) Date of filing: 02.09.2020
(51) Int. Cl.: C02F 1/42, C02F 1/44, C02F 1/469, C02F 5/10, C02F 9/00, C23F 14/02, F22B 37/00, F22B 37/56, C02F 101/10, C02F 101/12

(54) **METHOD FOR REDUCING CORROSION FATIGUE OF EVAPORATING TUBE IN BOILER**
VERFAHREN ZUR VERMINDERUNG DER KORROSIONSERMÜDUNG EINES VERDAMPFERROHRS IN EINEM KESSEL
PROCÉDÉ DE RÉDUCTION DE LA FATIGUE DE CORROSION D'UN TUBE D'ÉVAPORATION DANS UNE CHAUDIÈRE

(30) Priority: 12.03.2020 JP 2020043295
(43) Date of publication of application: 18.01.2023
(73) Proprietor: Kurita Water Industries Ltd., Tokyo 164-0001 (JP)
(72) Inventor: SAKAI, Mizuyuki, Tokyo 164-0001 (JP); UCHIDA, Kazuyoshi, Tokyo 164-0001 (JP)
(74) Representative: Hoffmann Eitle
(86) International application number: PCT/JP2020/033205
(87) International publication number: WO 2021/181723

(56) References cited:
- CN-U- 208 918 783
- JP-A- 2002 048 776
- JP-A- 2009 039 599
- JP-A- 2015 068 631
- JP-A- 2017 012 991
- JP-A- 2017 074 550
- JP-B2- 5 013 064

## Description

### Technical Field

The present invention relates to a method for inhibiting corrosion fatigue of an evaporation tube in a boiler. In particular, the present invention relates to a method for effectively inhibiting corrosion fatigue of an evaporation tube in a boiler associated with a corrosive environment and repeated stress due to the presence of scales.

### Background Art

In recent years, many boilers in the market of low-pressure boilers have a heat transfer area of 10 to 40 m², and in particular, a compact multi-tubular special circulation boiler constituted with only a header, a steam separator, and an evaporation tube (hereinafter, referred to as "small-type once-through boiler") has the overwhelming share. The small-type once-through boiler is often operated with multiple can installation in which a plurality of boilers are installed, and operated with repeated starts and stops in many times depending on an demand amount of steam. Water is fed particularly at a lower part of the evaporation tube with a circulation ratio of 2 or less. Thus, the proximity of the lower part had a low pH and a high level of dissolved oxygen, and corrosion is likely to occur. In many cases, corrosion fatigue derived from this corrosive environment and repeated stress generated by change in temperature due to the starts and stops of the boiler operations causes cracking on the evaporation tube, leading to water leakage.

It is difficult to completely prevent such corrosion fatigue by only conventional water treatment of fed water into the boiler (hereinafter, also referred to as feed-water for the boiler). Accordingly, cracking may occur on the evaporation tube to cause water leakage in approximately three years in the shortest.

With insufficient water quality management of the feed-water for the boiler, a scale component often causes contamination of the feed-water for the boiler to generate scales adhering in the boiler. In particular, scale adhesion onto a heat transfer surface of the boiler inhibits heat transfer to lower thermal efficiency of the boiler, leading to increase in a fuel cost. Thus, prevention of the scale adhesion, in addition to prevention of the corrosion fatigue, is required for the boiler.

Art for inhibiting the corrosion and art for inhibiting the scale adhesion are conventionally reported separately.

For example, measures for inhibiting the corrosion include the following (1) to (3).
(1) pH of water in a steam generator of a boiler (hereinafter, water in the boiler) is maintained at an upper limit of a control standard value.
(2) The concentration of an oxygen scavenger is maintained at high within a control standard value.
(3) Blowing a can bottom is performed not immediately after finishing operation but immediately before starting operation to inhibit contamination of oxygen at a high concentration and to inhibit lowering the pH.

Measures for inhibiting the scale include the following (1) to (3).
(1) A reverse-osmosis membrane treatment or a softening treatment of the feed-water for the boiler is performed.
(2) In order to inhibit scale generation, a scale dispersant or a boiler compound is added (For example, PTL 1 and 2).
(3) Blow control of the water in the boiler is performed to eliminate the scale component.
PTL 3 describes a make-up water supply method for boiler feed-water, wherein the make-up water is treated by a water softening device having a group of resin units including a plurality of resin units filled with sodium cation exchange resin, a cross-flow type filtration device having a nano filtration film, and a deoxidizing device, and the deoxidized softened water from which sulfate ion is removed is stored in a water storage tank as the boiler feed-water. A concentration of hard components in the make-up water, the total ion concentration of chloride ion and sulfate ion, and a water temperature of the make-up water are respectively measured between the water softening device and the filtration device, the resin unit is switched to another one in the group of resin units when the concentration of hard component is over a prescribed concentration, the blowing amount from the filtration device is increased when the total ion concentration is over a prescribed value, and the make-up water is passed through the deoxidizing device while lowering a flow rate of the make-up water when the water temperature is lower than a prescribed temperature. PTL 4 discloses a method in which boiler water is treated by reverse osmosis and with a scale dispersant.

### Citation List

### Patent Literatures

PTL 1: JP 2017-74550A
PTL 2: JP 2017-12991A
PTL 3: JP 5013064 B2
PTL 4: JP 2017 012991 A

### Summary of Invention

### Technical Problem

The corrosion fatigue of the evaporation tube in the boiler cannot be sufficiently inhibited by the conventional methods for inhibiting corrosion in some cases.

The present inventors have investigated a cause of the corrosion fatigue, and as a result, have found that, in many cases, scales adhering to a potion having high heat transfer load, such as the evaporation tube, rises a temperature of a tube wall of the evaporation tube to expand and contract the evaporation tube with starting and stopping the boiler operation, and consequently enlarged stress and corrosion fatigue break the evaporation tube to cause water leakage. From this finding, the preset inventors have found that the corrosion fatigue of the evaporation tube in the boiler is significantly associated with not only the corrosive environment but also the presence of the scales.

An object of the present invention is to provide a method for effectively inhibiting the corrosion fatigue of the evaporation tube in the boiler associated with the corrosive environment and the repeated stress due to the presence of scales.

### Solution to Problem

The present inventors have found that controlling a chloride ion concentration and a sulfate ion concentration of water in the boiler to be low can sufficiently inhibit the corrosion and effectively inhibit the corrosion fatigue of the evaporation tube. In addition, the present inventors have found that adding a scale dispersant to the water in the boiler to inhibit the scale adhesion can further inhibit the corrosion fatigue of the evaporation tube.

The present invention is summarized as follows.

A method for inhibiting corrosion fatigue of an evaporation tube in a boiler, comprising controlling each of a chloride ion concentration and a sulfate ion concentration of water in the boiler to 1.0 mg/L or less and adding a scale dispersant to the water in the boiler, wherein the chloride ion concentration and the sulfate ion concentration of the water in the boiler are controlled by desalination-treating raw water used for feed-water for the boiler with an ion-exchanger, a reverse-osmosis membrane device, or an electrical deionizer, or by increasing a recovery rate of condensate water of the boiler, and wherein the scale dispersant is at least one selected from the group consisting of polyacrylic acid having a weight-average molecular weight of more than 50,000 and 120,000 or less, a salt thereof, polymethacrylic acid having a weight-average molecular weight of more than 5,000 and 80,000 or less, and a salt thereof.

Further embodiments of the method of the present invention are described below and in the appended claims.

### Advantageous Effect of Invention

According to the present invention, the corrosion fatigue of the evaporation tube in the boiler caused by the corrosive environment and the repeated stress due to the presence of scales is effectively inhibited to intent to extend a lifetime of the boiler.

### Brief Description of Drawing

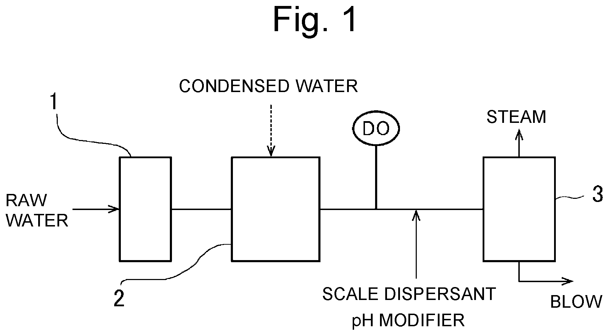

[Fig. 1] Fig. 1 is a schematic view illustrating a flow of a water system in a boiler of a test target in Test Example I.

### Description of Embodiments

Hereinafter, embodiments of the present invention will be described in detail.

A method for inhibiting corrosion fatigue of an evaporation tube in a boiler according to the invention is characterized by controlling each of a chloride ion concentration and a sulfate ion concentration of water in the boiler, that is, water in a steam generator in a boiler, to 1.0 mg/L or less.

According to the invention, each of concentrations of the corrosive chloride ion and sulfate ion (hereinafter, these may be referred to as "corrosive ions") is controlled to 1.0 mg/L or less to inhibit corrosion of the evaporation tube triggering the corrosion fatigue. This configuration can inhibit the corrosion fatigue.

In order to adjust the corrosive ion concentration of the water in the boiler to the above upper limit or the method used is: desalination-treating raw water used for feed-water for the boiler with an ion-exchanger (such as multi-bed column type or mixed-bed column type ion-exchanger), a reverse-osmosis membrane device, or an electrical deionizer; increasing a recovery rate of condensate water of the boiler. Two or more of these methods may be used in combination.

When quality of the raw water varies, quality of the supplying water after treated is likely to vary with the method using the reverse-osmosis membrane device. Thus, it is more preferable to use the electrical deionizer in combination therewith.

The corrosive ion concentration of the water in the boiler is controlled by regulating the corrosive ion concentration of feed-water for the boiler to equal to or lower than an upper limit of the corrosive ion concentration of the water in the boiler by using the above method.

In a preferred embodiment, as well as the corrosive ion concentration of the water in the boiler, a silica concentration is controlled to equal to or lower than the corrosive ion concentration of the water in the boiler (for example, 10 mg/L or less) from the viewpoint of inhibition of the scale generation to more surely inhibit the corrosion fatigue of the evaporation tube.

The silica concentration can also be reduced by the treatment with the ion-exchanger, the reverse-osmosis membrane device, or the electrical deionizer; or regulation of the recovery rate of condensate water, similar to the corrosive ion concentration.

In the present invention, the corrosion fatigue is inhibited effectively by reducing the corrosive ion concentration of the water in the boiler as described above, and also by adding a scale dispersant to the water in the boiler to inhibit the scale adhesion onto the evaporation tube.

The scale dispersant inhibits scaling of a hardness component contained in the water system, or rejects scales that has adhered. The scale dispersant is polyacrylic acid having a weight-average molecular weight of more than 50,000 and 120,000 or less and/or a salt thereof, or polymethacrylic acid having a weight-average molecular weight of more than 5,000 and 80,000 or less and/or a salt thereof.

When the scale dispersant is used, a place where the scale dispersant is added is not particularly limited as long as the scale dispersant is contained in the water in the boiler. The scale dispersant is added into at least one place of a water system in the boiler including a water feeding system (water feeding line), water supplying system (water supplying line), water in the boiler, and water condensate system (water condensate line) of the boiler. The scale dispersant may be added into any of piping of the feed-water for the boiler, a water feeding tank, water supplying piping, a water supplying tank, water condensate piping, and a water condensate tank, and may be added at two or more of these places.

When the scale dispersant is added into the water system in the boiler, the addition amount is not particularly limited, and varies depending on quality of the feed-water for the boiler (the dissolved oxygen concentration and concentrations of corrosive salts) and scaling tendency derived from the operation condition of the boiler. From the viewpoint of reducing the chemical cost and obtaining a sufficient scale inhibition effect, for example with the polymer-type scale dispersant, the scale dispersant is preferably added at an amount so that the concentration in the feed-water for the boiler becomes 1 to 1,000 mg/L, particularly 10 to 500 mg/L.

When the ion-exchanged water is used for the water in the boiler, as quality of the ion-exchanged water, electroconductivity is preferably 1 mS/m or less, particularly 0.5 mS/m or less, and especially 0.1 mS/m or less. With the ion-exchanged water in which salts are rejected so that the electroconductivity is equal to or lower than the above upper limit, the corrosion of the evaporation tube can be more surely inhibited to improve the inhibition effect of the corrosion fatigue.

In the water system in the boiler, soft water in which raw water is subjected to a softening treatment with a softener is used for the feed-water for the boiler to inhibit scales in some cases. However, the softening treatment alone rejects only a cationic component, and cannot reject the corrosive salts, leading to insufficient effect of inhibiting the corrosion fatigue of the evaporation tube.

The boiler to which the present invention is applied is not particularly limited, but is preferably a boiler with a steam pressure of 4 MPa or lower, and more preferably a low-pressure boiler with a steam pressure of 2 MPa or lower from the viewpoint that the corrosion fatigue of the evaporation tube is likely to occur. Examples of representative low-pressure boilers include a small-type once-through boiler. A steam pressure of the small-type once-through boiler is, for example, 1 MPa or lower.

Types of the small-type once-through boiler include a round can body and a rectangular can body. The round can body is a can body having a combustion chamber at a central part and disposing a burner at an upper part. The rectangular can body is a can body having no combustion chamber and disposing a gas burner adjacent to a side face of a water tube.

The corrosion fatigue of the evaporation tube is more likely to occur in the rectangular can body than the round can body. According to the present invention, controlling the chloride ion concentration and the sulfate ion concentration of the water in the boiler, and in addition, using the scale dispersant enable to sufficiently inhibit the corrosion fatigue of the evaporation tube even in the rectangular small-type once-through boiler.

The corrosion fatigue is more likely to occur in the rectangular can body presumably because thermal load becomes ununiform in the rectangular can body compared with the round can body due to its structure, and thus the evaporation tube is likely to expand and contract to cause the corrosion fatigue triggered by the corrosion.

### Examples

Hereinafter, Experimental Examples, Examples, and Comparative Examples will be described.

Hereinafter, concentrations of chloride ion, sulfate ion, and silica were analyzed in advance in accordance with "JIS B8224 Boiler feed water and boiler water - Testing methods".

### [Experimental Example 1]

Effect of the salts on the corrosion fatigue was evaluated by a corrosion fatigue test. Quality of a test solution was set so as to contain chloride ion, sulfate ion, and silica, with expecting soft water.

First, the following preparation was performed to determine a rupture condition of a used specimen.

A specimen made of a material STB340 was processed for a circular-arc fatigue test. Specifically, the specimen was processed to a shape having a parallel part and an R part (circular-arc part), and the parallel part and the R part were #800-polished.

This specimen was used to perform a tensile test in the atmosphere, and a stress corresponding to a maximum load in an elastic region was determined as 220 MPa. This value was set as the maximum stress in the corrosion fatigue test.

Then, the above specimen was set on an axis of a corrosion fatigue tester, and 1 L of a test solution was poured into a fixed beaker so that the specimen was completely immersed.

The test solution was adjusted to have the following test solution composition and pH by using ion-exchanged water, sodium chloride and sodium sulfate that were special grade reagents, 48% sodium hydroxide, and sodium silicate No. 3. The temperature of the test solution was regulated to 85°C.

Next, oxygen gas was continuously supplied into the beaker so that a dissolved oxygen concentration in the beaker became a value shown in Table 1, and the supply amount of the gas was controlled with monitoring a dissolved oxygen meter provided on a circulation line so that the dissolved oxygen concentration became constant.

When the dissolved oxygen concentration became constant, the maximum stress was set to 220 MPa aiming a test time of 96 hours to perform a test with the corrosion fatigue tester.

The test conditions are as follows.

### <Conditions of Corrosion Fatigue Test>

Specimen: Circular-arc fatigue specimen made of STB340 (with considering ASTM E466-96)
Pretreatment of specimen: Parallel part and R part were #800-finished.
Control: Load controlling
Waveform: Sine wave
Maximum stress: 220 MPa
Frequency: 4.0 Hz
Test term: 96 hours at maximum
Temperature of test solution: 85°C
Composition of test solution: Concentrations of chloride ion, sulfate ion, and silica were those shown in Table 1.

In No. 1, the concentration was each 100 mg/L with expecting 10-time concentration in the steam generator when a concentration of each substance was 10 mg/L in feeding soft water.

In No. 2, the water quality was that expected with feeding soft water and a recovery rate of the condensate water being as high as 90% or more.

In No. 3, the water quality was that expected with feeding ion-exchanged water and 50-time or more concentration. Since silica is more likely to leak at a slight amount than salts in ion-exchanged water, only the silica concentration was 10 mg/L.
pH of test solution: 11.0
Dissolved oxygen concentration in test solution: 8.0 mg/L
Amount of test solution: 1 L

### <Results>

Table 1 shows the results.

**[Table 1]**

| Test No. | Chloride ion concentration (mg/L) | Sulfate ion concentration (mg/L) | Silica concentration (mg/L) | Number of tensing (ten thousands) | Presence/Absence of specimen rupture | Note |
|---|---|---|---|---|---|---|
| 1 | 100 | 100 | 100 | 68 | Presence | Comparative Example |
| 2 | 10 | 10 | 10 | 80 | Presence | Reference Example |
| 3 | 1 | 1 | 10 | 141 | Absence | |

### <Consideration>

Table 1 demonstrates the followings.

It has been confirmed that lower corrosive ion concentration increases the number of tensing leading to the specimen rupture, and with each corrosive ion concentration of 10 mg/L or less, the specimen is unlikely to rupture. In particular, it has been confirmed that no rupture occurs with each corrosive ion concentration of 1 mg/L or less.

This was presumably because lower corrosive ion concentration was unlikely to generate corrosion on the specimen surface, or inhibited corrosion growth in fine cracking.

### [Test Example I]

### <Reference Example I-1, Examples I-2 to 5 and Comparative Examples I-1 to 3>

In a water system in a boiler illustrated in Fig. 1, investigated was a relationship between: corrosive ion concentration of feed-water for the boiler and the presence/absence of addition of a scale dispersant; and a state of the corrosion fatigue of the evaporation tube.

In this water system in the boiler, water in which raw water is treated with an ion-exchanger or a softener 1 runs through a water feeding tank 2 to be fed into a boiler 3, and condensate water generated in the boiler 3 is returned to the water feeding tank 2. The dissolved oxygen concentration was measured immediately after an outlet of the water feeding tank 2. The scale dispersant and a hydroxide-type pH regulator were injected to a water feeding line, which was before a boiler 3.

With this water system in the boiler when the corrosive ion concentration was not controlled, cracking on the evaporation tube due to the corrosion fatigue occurred to happen a leakage accident within eight years from an operation starting.

Specifications of the target boiler are as follows.
Target boiler: Small-type once-through boiler
Operation pressure: 1.0 MPa or lower
Type of fed water: Any of soft water, soft water + condensate water, ion-exchanged water, and ion-exchanged water + condensate water.
Quality of water in boiler: pH = 11.0 to 11.8
   Electroconductivity = 50 to 400 mS/m
   Dissolved oxygen concentration = 8.0 mg/L
   Concentrations of chloride ion, sulfate ion, and silica are those shown in Table 2.
Scale dispersant: The following sodium polyacrylate (PANa), sodium polymethacrylate (PMNa), or an orthophosphate salt was used. The addition amount of the polymer was 30 mg/L as a pure component, and the addition amount of the orthophosphate salt was 30 mg/L as phosphate ion, of the water in the boiler.
PANa (4,000): Sodium polyacrylate having a weight-average molecular weight of 4,000
PANa (60,000): Sodium polyacrylate having a weight-average molecular weight of 60,000
PMNa (10,000): Sodium polymethacrylate having a weight-average molecular weight of 10,000
Orthophosphate salt: Sodium salt of orthophosphoric acid
Number of boiler cans of investigation target: 559

### <Results>

The operation term was eight years. Investigated were the number of cracking occurrence on the evaporation tube and occurrence rate of the cracking in the operation term of eight years. Table 2 shows the results.

**[Table 2]**

| | Concentrations in feed-water for boiler (mg/L) | | | Presence/Absence of addition of scale dispersant | Number of cans with cracking | Number of cans without cracking | Occurrence rate of cracking (%) |
|---|---|---|---|---|---|---|---|
| | Chloride ion | Sulfate ion | Silica | | | | |
| Comparative Example I-1 | 80-100 | 80-100 | 80-100 | Absence | 75 | 192 | 28.1 |
| Comparative Example I-2 | 80-100 | 80-100 | 80-100 | PANa (4,000) added | 15 | 53 | 22.1 |
| Comparative Example I-3 | more than 10 and 50 or less | more than 10 and 50 or less | more than 10 and 50 or less | PMNa (10,000) added | 10 | 48 | 17.2 |
| Reference Example I-1 | 1 | 1 | 1 | Absence | 4 | 33 | 10.8 |
| Reference Example I-2 | 1 | 1 | 1 | Orthophosphate salt added | 2 | 22 | 8.3 |
| Reference Example I-3 | 1 | 1 | 1 | PANa (4,000) added | 2 | 26 | 7.1 |
| Example I-4 | 1 | 1 | 1 | PMNa (10,000) added | 1 | 28 | 3.4 |
| Example I-5 | 1 | 1 | 1 | PANa (60,000) added | 1 | 47 | 2.1 |

### <Consideration>

Table 2 demonstrates the followings.

With high corrosive ion concentration and without the scale dispersant (Comparative Example I-1), the corrosion fatigue was most likely to occur.

When no scale dispersant was added, in Reference Example I-1 in which each corrosive ion concentration was as low as 1 mg/L, it was presumed that the corrosion was inhibited, the tensile stress was unlikely to increase, and the occurrence of the corrosion fatigue was inhibited compared with Comparative Example I-1 in which each corrosive ion concentration was as high as 80 to 100 mg/L. In Reference Examples I-2 to and I-3 and Examples I-4 and I-5 in which each corrosive ion concentration was 1 mg/L and the scale dispersant was used, almost no scale adhered, and few cracking occurs. This was presumably because the tensile stress due to the scale adhesion was reduced, and the low concentrations of the salts yielded an environment where fatigue and its growth due to the corrosion were more unlikely to occur.

From the above, it has been confirmed that, for inhibiting the corrosion fatigue, not only inhibiting the corrosion of the evaporation tube but also inhibiting the scale adhesion further exhibit the effect.

The present invention has been described in detail by using the specific aspect, but it is obvious for ones skilled in the art that various modification can be made without departing from the scope of the present invention as defined in the claims.

The present application is based on Japanese Patent Application No. 2020-043295, filed on March 12, 2020.

### Reference Sings List

1 ION-EXCHANGER OR SOFTENER
2 WATER FEEDING TANK
3 BOILER

## Claims

1. A method for inhibiting corrosion fatigue of an evaporation tube in a boiler, comprising controlling each of a chloride ion concentration and a sulfate ion concentration of water in the boiler to 1.0 mg/L or less and adding a scale dispersant to the water in the boiler,
wherein the chloride ion concentration and the sulfate ion concentration of the water in the boiler are controlled by desalination-treating raw water used for feed-water for the boiler with an ion-exchanger, a reverse-osmosis membrane device, or an electrical deionizer, or by increasing a recovery rate of condensate water of the boiler, and
wherein the scale dispersant is at least one selected from the group consisting of polyacrylic acid having a weight-average molecular weight of more than 50,000 and 120,000 or less, a salt thereof, polymethacrylic acid having a weight-average molecular weight of more than 5,000 and 80,000 or less, and a salt thereof.

2. The method for inhibiting corrosion fatigue of an evaporation tube in a boiler according to claim 1, wherein a concentration of the scale dispersant in the water in the boiler is 1 to 1,000 mg/L.

3. The method for inhibiting corrosion fatigue of an evaporation tube in a boiler according to claims 1 or 2, wherein the boiler is a small-type once-through boiler.

## Patentansprüche

1. Verfahren zur Verhinderung der Korrosionsermüdung eines Verdampfungsrohrs in einem Kessel, umfassend das Regulieren einer Chloridionenkonzentration und einer Sulfationenkonzentration von Wasser in dem Kessel auf jeweils 1,0 mg/L oder weniger und das Hinzugeben eines Kesselsteindispergiermittels zum Wasser in dem Kessel,
wobei die Chloridionenkonzentration und die Sulfationenkonzentration des Wassers in dem Kessel durch eine Entsalzungsbehandlung des als Speisewasser für den Kessel verwendeten Rohwassers mit einem Ionenaustauscher, einer Umkehr-Osmose-Membranvorrichtung oder einem elektrischen Deionisierer oder durch eine Erhöhung der Rückgewinnungsrate des Kondenswassers des Kessels reguliert werden und
das Kesselsteindispergiermittel mindestens eines, ausgewählt aus der Gruppe, bestehend aus Polyacrylsäure mit einem gewichtsmittleren Molekulargewicht von mehr als 50.000 und 120.000 oder weniger, einem Salz davon, Polymethacrylsäure mit einem gewichtsmittleren Molekulargewicht von mehr als 5.000 und 80, .000 oder weniger und einem Salz davon, ist.

2. Verfahren zur Verhinderung der Korrosionsermüdung eines Verdampfungsrohrs in einem Kessel gemäß Anspruch 1, wobei eine Konzentration des Kesselsteindispergiermittels in dem Wasser im Kessel 1 bis 1.000 mg/L beträgt.

3. Verfahren zur Verhinderung der Korrosionsermüdung eines Verdampfungsrohrs in einem Kessel gemäß Anspruch 1 oder 2, wobei der Kessel ein kleiner Durchlaufkessel ist.

## Revendications

1. Procédé pour prévenir la fatigue due à la corrosion d'un tube d'évaporation dans une chaudière, comprenant le fait de commander chaque concentration parmi une concentration en ions chlorure et une concentration en ions sulfate de l'eau dans la chaudière sur une valeur inférieure ou égale à 1,0 mg/L et d'ajouter un dispersant de tartre à l'eau dans la chaudière,
dans lequel la concentration en ions chlorure et la concentration en ions sulfate de l'eau dans la chaudière sont commandées par un traitement de dessalement de l'eau brute utilisée pour l'eau d'alimentation de la chaudière avec un échangeur d'ions, un dispositif à membrane d'osmose inverse ou un déioniseur électrique, ou en augmentant le taux de récupération de l'eau de condensation de la chaudière, et
dans lequel le dispersant de tartre est au moins un élément choisi dans le groupe constitué de l'acide polyacrylique ayant une masse moléculaire moyenne en poids de plus de 50 000 et 120 000 ou moins, un sel de celui-ci, et de l'acide polyméthacrylique ayant une masse moléculaire moyenne en poids de plus de 5 000 et 80 000 ou moins et un sel de celui-ci.

2. Procédé de prévention de la fatigue due à la corrosion d'un tube d'évaporation dans une chaudière selon la revendication 1, dans lequel une concentration du dispersant de tartre dans l'eau de la chaudière est comprise de 1 à 1000 mg/L.

3. Procédé de prévention de la fatigue due à la corrosion d'un tube d'évaporation dans une chaudière selon les revendications 1 ou 2, dans lequel la chaudière est une chaudière à passage unique de type petit.
